# EUROPEAN PATENT APPLICATION

(11) **EP 1 126 382 A2**
(43) Date of publication of application: **22.08.2001**
(21) Application number: 00311640.7
(22) Date of filing: 22.12.2000
(51) Int. Cl.: G06F 17/30

(54) **Methods for facilitating web-based information exchange**

(30) Priority: 30.12.1999 US 173844 P; 07.07.2000 US 611460
(71) Applicant: GENERAL ELECTRIC COMPANY, Schenectady, NY 12345 (US)
(72) Inventor: Fuselier, Christopher S., Farmington, Connecticut 06032 (US); Wille, Guillermo, Avon, Connecticut 06101 (US); Schuiteman, Bryan, Middletown, Connecticut 06457 (US); Scanlon, James R., South Windsor, Connecticut 06074 (US); Wasserman, Jason, Weatogue, Connecticut 06089 (US); Saluja, Rahul, Sadar Bazar, Bialspur, MP (IN); Reed, Eric Bryan, Cromwell, Connecticut 06416 (US); Brudz, Patricia, Burlington, Connecticut 06013 (US); Dougherty, John James, Collegeville, Pennsylvania 19426 (US); Potter, Jonathan, Southington, Connecticut 16489 (US)
(74) Representative: Pedder, James Cuthbert

(57) **Abstract**

A method for facilitating Web-based information exchange includes the step of providing a centralized Web structure for the Web-based information of an organization. The Web-based information includes Web pages and interactive Web-based applications. The Web structure includes multiple Web sites linked to at least one common site to which the Web-based information generated by the organization is linked, directly or indirectly. Thus the Web structure provides a user with single point of entry access to the Web-based information of the organization.

## Description

The collections of computer networks known as the Internet and World Wide Web have produced a dramatic improvement in electronic communications and information access. Using remote terminals and local area networks connected with the Internet, individuals and organizations are now able to easily communicate electronically, by sending messages, and relaying, displaying and accessing information. Much of the information now available on the Internet is displayed on Web pages usually composed in Hyper-text Mark-up Language (HTML). Web pages, and connected series of pages called Web sites, typically are structured and connected using hyperlinks. Hyperlinks, by implicitly invoking the URL of a related Web page, offer the computer user "point and click" options for navigating through the pages of the Web site using a mouse. Usually, a Web site includes a home page that displays a directory or listing of multiple hyperlinks which direct the user to a number of different but related Web pages. A typical Web site is thus introduced by a home page, and the computer user uses the mouse to navigate through the multiple hyperlinks available on each page.

Despite the advantages offered by the Web, most Web site designers and administrators still struggle with composing and organizing a Web site to maximize user-friendliness. Problems frequently encountered by computer users navigating through a Web site include Web pages crowded with multiple hyperlinks, difficult to read or ambiguous hyperlinks, "missing hyperlinks" for accessing information known to be available on the site, and in general, poorly organized Web pages and sites. When one figures a few seconds or more for connecting to each new page, navigating through a poorly organized Web site is frequently a frustrating and time-consuming task.

For large organizations having multiple divisions, and especially organizations with nationally or internationally distributed divisions, the Web offers unique advantages for rapid and convenient intra-organization communications. However, the rapid growth of the Web has resulted in organizational problems that make finding specific information on the Web increasingly difficult and time-consuming. In particular, the vast amounts of information now available on the Web are not easily sorted and organized in such a way that a user can easily find desired information. The problems of Web site organization are especially acute for large organizations that desire to improve internal communications, simply because of the huge and varied amount of information to be organized and presented in a meaningful way to different users with different needs. Many large organizations leave this problem unaddressed and simply maintain Web sites that are very difficult for-a user to navigate. Other organizations answer this problem by maintaining multiple, functionally disconnected Web sites for each division or department, leaving communication gaps between the divisions or departments.

It would therefore be desirable to provide a method for facilitating Web-based information exchange. It would also be desirable to provide a method for facilitating network communications among individuals in different divisions of an organization. It would further be desirable to provide a method that allows effective Web-based communications among individuals working in different geographic locations for the same organization. It would be still further desirable to provide a method to facilitate global, intra-organization communications that reduces phone and standard mail usage.

In an exemplary embodiment, a method for facilitating Web-based information exchange includes the steps of providing a centralized Web structure for the Web-based information of an organization. The Web-based information includes Web pages and interactive Web-based applications. The Web structure includes multiple Web sites linked to at least one common site to which the Web-based information generated or owned by the organization is linked, directly or indirectly. Thus the Web structure provides a user with single point of entry access to the Web-based information of the organization. Security features are added at each entry point so that a user accessing the structure is identified and provided with access to certain classes or types of information depending on the status of the user. Thus, the centralized Web structure provides a user with the ability to share Web-based information across the entire organization, and the information is available every day, at any time of day or night.

In one embodiment, the information linked in the centralized Web structure includes information targeted to specific individuals and teams of individuals within the organization, information targeted to specific projects within the organization, and information targeted to specific issues within the organization. The method also includes the step of providing access to interactive Web-based applications through the centralized Web structure. The applications provide on-line processes for carrying out different organizational tasks relating to the individuals, teams, projects and issues within the organization. In an exemplary embodiment, such interactive applications include on-line funding approval for projects, project tracking throughout the organization, and facilitating communications among team members or others having common tasks or project goals.

The invention will now be described in greater detail, by way of example, with reference to the accompanying drawings, in which:
Figure 1 is a schematic diagram of an exemplary Web structure embodying a method for facilitating Web-based information exchange;
Figure 2 is a schematic diagram of an exemplary navigational scheme applied to the Web structure;
Figure 3 is a flow diagram of the method for facilitating Web-based information exchange;
Figure 4 is a block diagram of an exemplary network for implementing the method for facilitating Web-based information exchange;
Figure 5 is a flow chart of a Web-based application for processing program funding requests;
Figure 6 is a first portion of a program summary Web page for implementing the Web-based application for processing program funding requests;
Figure 7 is a second portion of the program summary Web page;
Figure 8 is a third portion of the program summary Web page;
Figure 9 is a search page for implementing the Web-based application for processing program funding requests;
Figure 10 is a first portion of an exemplary search results page for implementing the Web-based application for processing program funding requests;
Figure 11 is a second portion of the exemplary search results page;
Figure 12 is an exemplary summary report search input page for implementing the Web-based application for processing program funding requests;
Figure 13 is an exemplary summary report page;
Figure 14 is a flow chart of a Web-based application for tracking communications and projects;
Figure 15 is an exemplary first personal page for implementing the Web-based application for tracking communications and projects;
Figure 16 is an exemplary second personal page for implementing the Web-based application for tracking communications and projects;
Figure 17 is an exemplary third personal page for implementing the Web-based application for tracking communications and projects;
Figure 18 is an exemplary first project tracking page for implementing the Web-based application for tracking communications and projects;
Figure 19 is an exemplary second project tracking page for implementing the Web-based application for tracking communications and projects;
Figure 20 is an exemplary third project tracking page for implementing the Web-based application for tracking communications and projects;
Figure 21 is an exemplary fourth project tracking page for implementing the Web-based application for tracking communications and projects;
Figure 22 is an exemplary fifth project tracking page for implementing the Web-based application for tracking communications and projects;
Figure 23 is an exemplary sixth project tracking page for implementing the Web-based application for tracking communications and projects;
Figure 24 is an exemplary team management main menu page for implementing the Web-based application for tracking communications and projects;
Figure 25 is an exemplary team page for implementing the Web-based application for tracking communications and projects; and
Figure 26 is an exemplary issue tracker main menu page for implementing the Web-based application for tracking communications and projects.

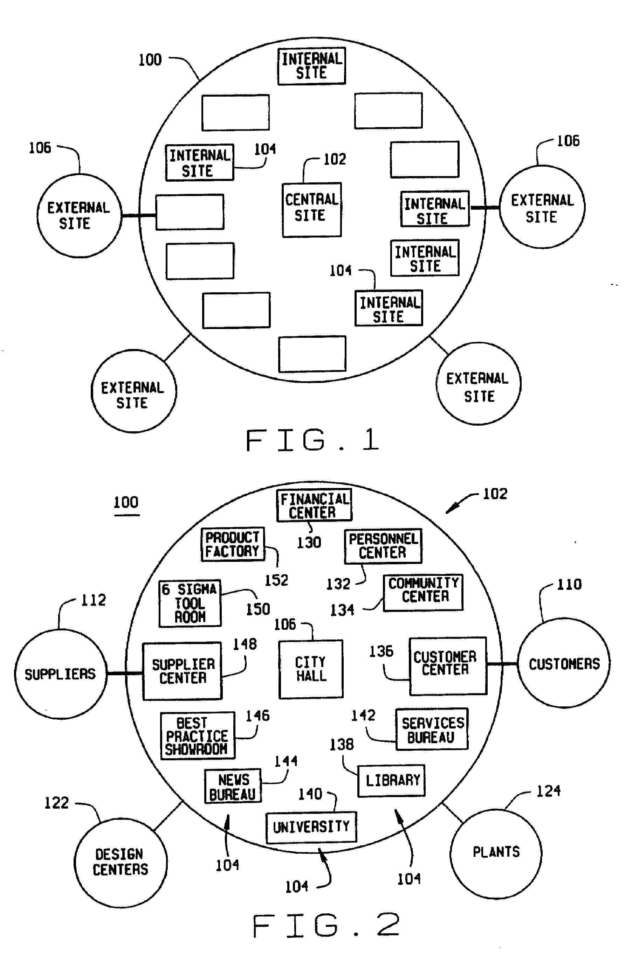

In an exemplary embodiment, a method for facilitating Web-based information exchange includes the steps of providing a centralized Web structure for the Web-based information of an organization. Figure 1 shows an exemplary Web structure 100 embodying the method for facilitating the exchange of Web-based information within an organization. Web structure 100 is a Web-based computer network architecture centralized around a central site 102. Web structure 100 includes multiple internal sites 104 linked directly or indirectly to central site 102. In one embodiment, sites 104 are also interconnected directly or indirectly to one another. Thus, Web structure 100 is characterized by the ability of a user to access any of the Web-based information stored in site 102 or sites 104 after entering from a single point at any one site.

In one embodiment, Web structure 100 also maintains connections with a plurality of sites 106 external to Web structure 100, such as those maintained by outside service providers or customers of the organization. In one embodiment, sites 104 are further subdivided as sites within a site, to further facilitate navigation by the user. Security features are added at each site 104 that allows entry into structure 100, so that a user accessing the structure is identified and provided with access to certain classes or types of information stored in structure 100 depending on the status of the user. Thus, centralized Web structure 100 provides a user with the ability to share information across the entire organization, and the information is available every day, at any time of day or night.

Web structure 100 is implemented on an internal computer network such as an Intranet. In an exemplary embodiment, Web structure 100 is connected to a distributed computer network such as the Internet, including that part of the Internet known as the World Wide Web. Remote users access Web structure 100 from a remote terminal using an Internet connection and a Web-browser as described in detail below. The term Web as used herein refers to the World Wide Web, wherein computers known as Web servers display graphical and textual information using "pages" composed in, for example, HTML, DHTML or ASP. However, although exemplary structure 100 described herein is connected to the Web, it should be understood that other types of distributed computer networks are suitable for using structure 100.

In an exemplary embodiment, Web structure 100 includes the Web-based information generated, owned or otherwise being distributed by an organization. The Web-based information is used to build central site 102 and sites 104, and includes Web documents or pages displaying information, and interactive Web-based applications. As described in more detail below, the Web documents or pages include, for example, communications or other information targeted to specific individuals and to teams of individuals within the organization, information targeted to specific projects within the organization, and information targeted to specific issues within the organization.

The interactive Web-based applications include applications for accessing Web-enabled and Web-centric databases. More specifically, the database applications provide for dynamic updating of specific Web-enabled databases accessible via the Web. For example, such applications include on-line processes for carrying out different organizational tasks relating to the individuals, teams, projects and issues within the organization. In an exemplary embodiment, the interactive Web-based applications include on-line funding approval for projects, project tracking throughout the organization, and facilitating communications among team members or others having common tasks or project goals.

In an exemplary embodiment, the method further includes the step of applying a centralized navigational scheme to Web structure 100. Figure 2 is a schematic diagram of an exemplary navigational scheme applied to Web structure 100. The navigational scheme includes multiple names, classifications or labels. Each name, classification or label is used to identify a different Web site 102 or 104 within Web structure 100. In one embodiment, for ease of use the names are based on a common theme, and the name of each site 102 or 104 is chosen to identify or suggest the function and content of the site. The names together form the navigational scheme that facilitates navigation throughout Web structure 100, from a single point of entry.

As shown in Figure 2, the exemplary navigational scheme uses a plurality of real location names or labels to identify sites 102 and 104, and Web structure 100 includes elements typically found in a community such as, for example, a city or business organization. Thus, structure 100 is a virtual community built, owned and maintained by the organization. Each site 102 and 104 is a virtual colocation. Each virtual co-location is identified with a different real location, such as a library, factory, news bureau or other building commonly found in a community. The virtual co-location of central common site 102 is, for example, identified as a central administration building such as City Hall 106. Alternatively, the real location of each virtual co-location is a department or division commonly found in an organization. For example, in one embodiment sites are named as departments such as Personnel or Human Resources, Accounting, Customer Service, Information Management, Records, and the like. The virtual co-locations, or other names or labels forming the centralized navigational scheme, are then used to classify and thereby facilitate navigation throughout Web structure 100 from any single point of entry. Web structure 100 thus centralizes the organization's Web-based communications, so that widely geographically distributed divisions or department of the organization are able to communicate around the clock.

Under the exemplary navigational scheme as shown in Figure 2, central site 102 is named City Hall 106 and Web structure 100 includes a financial center 130, a personnel center 132, a community center 134, a customer center 136, a library 138, a university. 140, a services bureau 142, a news bureau 144, a best practice showroom 146, a supplier center 148, a tool room 150, and a product factory 152. As is the case with a real community, the architecture of structure 100 changes over time as new information and functions (i.e. Web documents, pages and applications) are added to established sites 104, and new sites 104 are built in response to changing demands of the community. Of course, the specific choices about which sites to add and when to add them are a matter of choice for a site administrator or Web-master, taking into account the changing demands of the organization using structure 100.

Regardless of the navigational scheme chosen, an advantage exists in choosing the names of sites 104 to rapidly convey the functions of, and information available from, each site 104. Under the exemplary navigational scheme in Figure 2, the building name for each of sites 102 and 104 conveys the functions and information provided by the site by analogy to the functions and information typically supplied by the named site in a real community.

For example, central site 102 named City Hall 106 provides several functions identifiable with the functions provided by a real city hall. Such functions include, but are not limited to, supplying general information for the organization, maintaining a mayor's office, running a local council, maintaining a planning board, and maintaining security. Each of these functions includes sub-functions commonly understood to come within the real functions of a city hall. So, for example, supplying general information from City Hall 106 includes greeting and introducing a user to Web structure 100, supplying a site directory, and supplying a site search function to help new users figure out where and how to go to different sites within structure 100. Maintaining a mayor's office for example includes supplying vision statements and goals, articulating standards of review and planning goals, and reporting on status and results. Mayor's Office functions also include for example, scheduling and reporting on staff meetings. Local council functions include maintaining a council calendar and agenda, reporting on meetings, and articulating review results along with the mayor's Office. Planning Board functions include site maintenance, maintaining a Web map, and supplying site templates and guidelines for adding and changing sites.

A site 104 named Financial Center 130 provides financial results in various forms such as quarterly reports, provides project funding reports including which projects have been approved and status of such projects, provides approved budgets and status, and processes budget requests. A site 104 named Personnel Center 132 maintains a human resources database including identifying and contact information for individuals, for example employees, having a relationship with the business organization. The contact information includes, for example, telephone number(s), e-mail address, title, and a description of the individual's skill set. Individuals such as employees have access to their own records in the database so that personal contact information can be updated. Personnel Center 132 also maintains a census bureau which provides a skills inventory, giving users the ability to search for personnel having a particular skill set. Personnel Center 132 also includes, for example, a regularly updated recruitment page listing contact information for recruiters, and a hiring hall for posting job vacancies and looking for work notices. Other information accessible through Personnel Center 132 includes, for example, employment policies and procedures of the organization, and a management awards page for nominating employees for performance awards. Personnel Center 132 also provides pages directed toward newly hired employees. These pages include, for example, local housing information for new hires moving into a new location, general company information, and an orientation package.

A site 104 named Community Center 134 includes pages and links for providing information that promotes development of common interests among individuals in the business or organization. For example, Community Center 134 maintains newsgroups for common interest groups or business teams, a community bulletin board and calendar, and provides the meeting schedules and contact information for study groups for selected exams. A site 104 named Customer Center 136 maintains a customer gateway, regulating access to structure 102 following guidelines established by the organization, and implemented by requiring extra-network access codes. Customer Center 136 also serves as a portal to external customer web sites, such as external site 110.

A site 104 named Library 138 provides a single starting point for searching for any type of information available in structure 102. For example, Library 138 stores and provides access to information on past projects of the organization including project- specifications, design review documents, standards, market information and marketing literature, lessons learned, drawings, test results, patent and other intellectual property documents including applications, and other project-related information. Library 138 also includes a reference section providing a product reference section, product manuals, information on competitors, and standards and procedures of the organization. Library 138 further provides access to information resources available throughout structure 12, including files, databases, and search engines.

A site 104 named University 140 includes sourcing and technology information resources, including access to on-line course material in self-teaching previously recorded) format, and also in live (network meeting) format. University 140 also provides administrative functions such as providing a course catalog, course curricula, registration functions, and certification and contact information for third party integrators associated with the organization. In one embodiment, university 140 includes a link to a research and development page or site maintained by the organization's research division. The research and development site includes, for example, summaries of ongoing research and development, as well as links to on-line training applications

A site 104 named Services Bureau 142 provides pages for communicating and receiving information from service providers and consultants working with or for the organization. For example, Services Bureau 142 provides Help Desk pages that are monitored by the consultants or experts. Services Bureau 142 further provides, for example, information from a Chief Engineer's Office, including design and safety reviews of products, and production guidelines and standards. Services Bureau 142 also provides patent-related information from a Patent Office, including descriptions of available intellectual property services, and schedules and reports of patent council meetings.

A site 104 named News Bureau 144 provides news relating to the business of the organization. Such news includes, for example, links to corporate news pages and to an on-line business forum offering updates and discussion on the business activities of the organization. In one embodiment, news bureau 144 provides access to radio broadcasts that are broadcast through the user's local machine, and access to video-conferencing applications. In another embodiment, news bureau 144 also provides access to applications for daily personal time management. A site 104 named Best Practice Showroom 146 provides information, forms, processes and tools for a range of management activities, focussing on describing best practices for the organization as detailed from individuals outside the organization. The best practice information as provided by external sources is brought into the organization for internal consideration and implementation. Best practices specifications are applied to, for example, internal budgeting and hiring decisions, engineering assessments for each practice, Y2K reviews, and the like.

A site 104 named Supplier Center 148 provides information on suppliers for the organization, including contact information, descriptions of supplier expertise, projects involving specific suppliers, and supplier contracts. Supplier Center 148 also provides a secure gateway for suppliers wishing to access structure 100 from outside the Intranet. The gateway is monitored by requiring extra-network access codes, as is also the case with extra-network customer access. A site 104 named Tool Room 150 provides several types of tools for the system user. For example, Tool Room 150 provides Web tools including Web templates, Web infrastructure and Web monitoring. Tool room 150 also provides engineering tools and on-line database applications that have been developed or purchased by the organization.

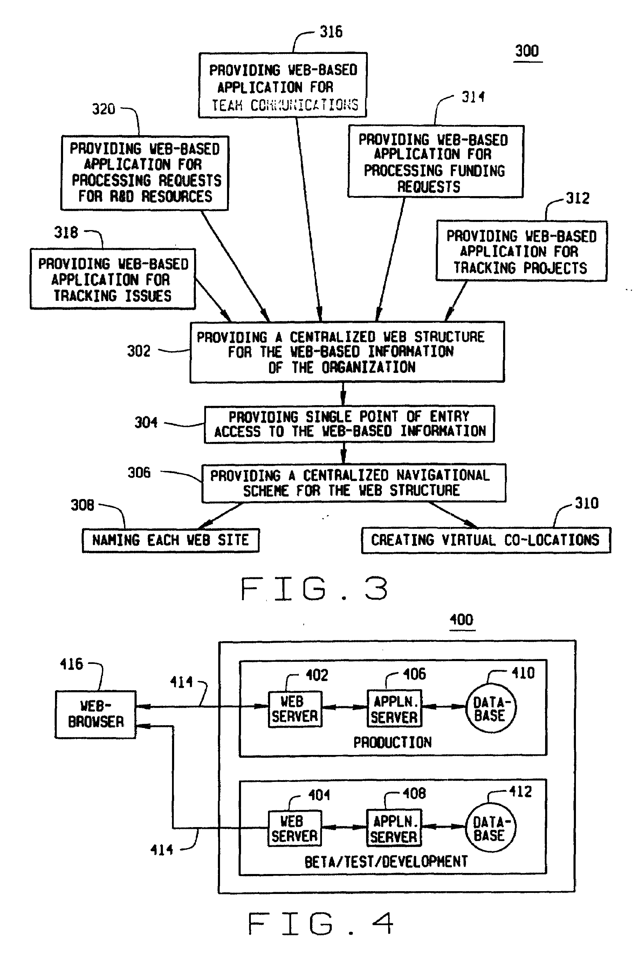

Figure 3 is a flow diagram of a method 300 using structure 100 to facilitate Web-based information exchange. In an exemplary embodiment, method 300 includes the step of providing 302 centralized Web structure 100 for the Web-based information generated by the organization, and providing 304 a user with single point of entry access to the Web-based information. In one embodiment, method 300 further includes the step of providing 306 a centralized navigational scheme for Web structure 100. Providing 306 the centralized navigational scheme includes the step of naming 308 each site 104 in Web structure 100 with a name that suggests or is associated with the function and content of each site 104. In one embodiment, the names are united under a common theme, such as buildings in a town or community as described above, or as divisions or departments within an organization. In an alternative embodiment, the names are not united under a common theme, but simply are chosen independently of one another to convey to the user the function and content of each site 104.

In an exemplary embodiment of method 300, step 306 of providing a centralized navigational scheme is practiced by creating 310 a plurality of virtual co-locations on a Web-server. The virtual co-locations correspond, for example, to sites 104 shown in Figure 2 and described in the accompanying text, each identified with a different building in a community. The virtual co-locations are then used to facilitate navigation through Web structure 100, thus aiding access to the Web-based information, including both Web pages and Web-based applications.

In one embodiment, step 302 as practiced with particular reference to that Web-based information that includes interactive Web-based applications, includes providing 312 a Web-based application for tracking of multiple projects as each project progresses through successive developmental stages within an organization, providing 314 a Web-based application for processing funding requests for specific projects, and providing 316 a Web-based application for transmitting team communications among members of a team. In alternative embodiments, step 302 further includes providing 318 a Web-based application for tracking issues regarding specific projects, and providing 320 a Web-based application for processing requests for use of research and development resources

By adding specific Web-based information to central Web-structure 100, and in particular by providing Web-based applications targeted to the specific needs of the organization, method 300 is adaptable to a variety of organizations and organizational schemes. For example, an exemplary organizational scheme might include multiple steps or levels of managerial decision-making on any given idea being considered by the organization. Such ideas include, for example, ideas considered potentially helpful to the operations of the business or organization, and stem from any type of source, within or outside of the organization. For example, the ideas might include new product ideas and product improvement ideas, as well as ideas for increasing productivity or efficiency. Each new idea is taken up by management personnel at a first level in the organization. Each idea is then assessed by the management personnel, and then action is taken on the idea depending on the outcome of the assessment. Each action has the potential to shift the responsibility for action to another level in the organization. Depending on the nature of the idea and the action taken at the first level, the responsibility for action shifts to any one of a number possible organizational levels (e.g. departments or divisions) within the organization. For example, possible actions on any one idea include a decision to immediately implement the idea with existing resources, leading to a "do it" or "immediate action" directive. An alternative action would be a decision that the idea requires funding and thus funding approval, leading to a "needs funding" directive and appropriate intra-organizational review. Another alternative action would be a decision that the idea requires use of research and development resources, leading to a "needs R&D resources" directive and appropriate review within the organization. Yet another alternative action would be a "hold" directive taken on ideas not currently warranting further action. Each of these different actions shifts the responsibility for action to a different individual or group of individuals within the organization.

Using method 300, any idea, and subsequent actions taken on the idea, is managed and tracked by tailoring Web structure 100, and the Web-based information accessible thereon, to the organizational scheme and needs of the organization. Thus, for example, method 300 as applied to the above-described organizational scheme includes providing Web-based information, including Web-based applications, that is specifically targeted toward implementing the types of decisions or actions taken by the organization. The Web-based information, and in particular the Web-based applications are written to conform to standard administrative procedures practiced by the organization. So, for example, method 300 as applied to an organization following the organizational scheme as described above includes step 314, providing a Web-based application for processing funding requests for specific projects. The Web-based application for processing funding requests is adapted to conform to a standard funding review process practiced by the organization. Method 300 also includes providing 316 a Web-based application for transmitting team communications among members of a team. With reference to a specific organization, step 316 thus includes providing a Web-based application directed toward specific teams as chosen and organized by the organization. In an exemplary embodiment, and as described in more detail below, each application is adaptable to include features specified by the organization.

Figure 4 is a block diagram of an exemplary system architecture 400 for implementing method 300. System architecture 400 includes a central Web server 402, or production server, and in one embodiment, an adjunct server 404 for development and test applications. Servers 402 and 404 are each linked to an application server, 406 and 408 respectively. Application servers 406 and 408 each store respectively, a database 410 and 412. Web servers 402 and 404 are linked by a network connection 414, such as an Intranet or an Internet connection, to a remote terminal 416. A Web-browser is installed on remote terminal as described below. Connection 414 is, for example, a telecommunications device such as a dedicated network cable, conventional phone line and modem, cable-free cellular digital packet transfer device, or other known remote data transfer system such as, for example, a satellite link. In one embodiment, a plurality (not shown) of remote terminals 416 are linked to servers 402 and 404 via connection 414. In another alternative embodiment, a plurality of remote terminals (not shown) are linked to Web servers 402 and 404 to form an Intranet.

Web servers 402 and 404 have stored in memory (not shown) hyperlinked data files containing the information stored at each site 104. The data files are composed in, for example, HTML, DHTML or ASP (Active Server Pages) format. In one embodiment Web server 402 also stores an e-mail application (not shown). Application servers 406 and 408 have stored in memory database applications for providing dynamic updating and manipulation of databases 410 and 412. More specifically, the Web-based applications are based in java script, ASP, Visual Basic, or are spreadsheet based. Databases 410 and 412 are each, for example, a commercially available Web-enabled database such as Oracle DB from Oracle Corporation, Redwood Shores, California. By updating and manipulating databases 410 and 412, the Web-based applications provide on-line tools for carrying out processes which are practiced throughout an organization, thereby consolidating and standardizing the processes throughout the organization.

The Web-browser is, for example, Netscape® by Netscape Communications Corporation, or Internet Explorer® by Microsoft Corporation, and is downloaded onto remote terminal 416. The location of specific pages on the Web , i.e. the Web address of each page, is specified by a uniform resource locator (URL), which is an alphanumeric string representing the address of server 402 on the Web. Multiple pages stored on Web server 402 are linked together via hyperlinks to form sites 104. Hyperlinks are represented on a computer screen by a graphical icon such as a button or a highlighted line of text. The hyperlinks are each configured to implicitly invoke another URL when a computer user clicks on a computer mouse button while a mouse-controlled screen cursor is positioned over a hyperlink icon. Thus, using exemplary navigational scheme 200 described above, a remote user at remote terminal 416 initially accesses a virtual co-location stored on Web server 402 by typing a specified URL into the Web-browser, or by clicking with a mouse on a supplied hyperlink.

As described above, each site 104 stores a subset of all the Web-based information generated by the organization and is accessible through Web structure 100. However, to facilitate navigation through Web structure 100, the Web-based information stored at each site 104 corresponds or is associated with the name chosen for site 104. So, for example, in one embodiment, Financial Center 130 as described above provides access to Web-based applications embodying processes or methods that provide specialized financially related services to the user.

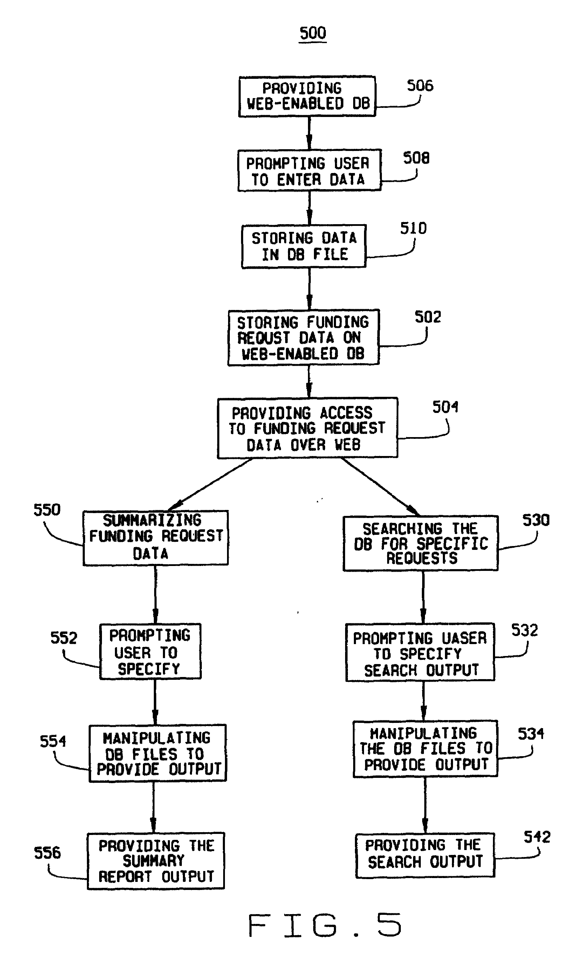

In an exemplary embodiment, services provided by Financial Center 130 include processing of funding requests, and thus Financial Center 130 includes a Web-based application embodying a method 500, shown in Figure 5, for processing funding requests, such as requests for funding of a specified project. In particular, method 500 is directed toward converting a manual funding review process to a Web-based process. Method 500 still requires manual input of a set of data, but automates submission of funding requests, reporting of funding requests, and also allows global access to the funding request data within the organization. In one embodiment, method 500 includes the steps of storing 502 funding request data on Web-enabled database 410, and providing 504 access to the funding request data over the Web.

The step of storing 502 the funding request data includes the step of providing 506 a Web-enabled database for storing the funding request data, prompting 508 a user to enter funding request data, and storing 510 the funding request data in a database file. The funding request data includes, for example, a project name, a category of business to which the project belongs, a division of the organization to which the project belongs, and financial data regarding the project, including cost figures and growth figures.

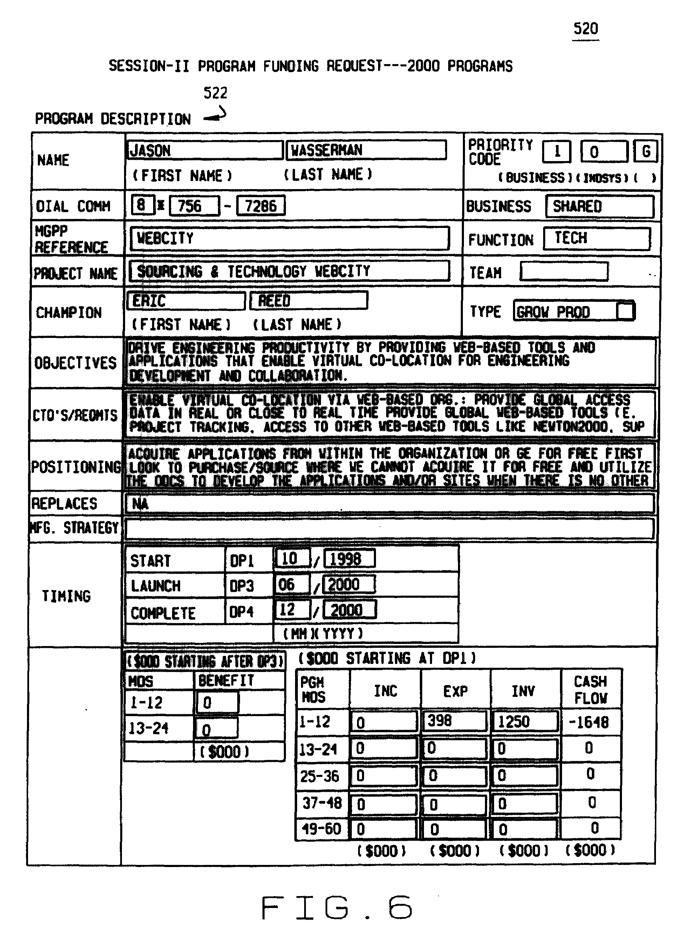

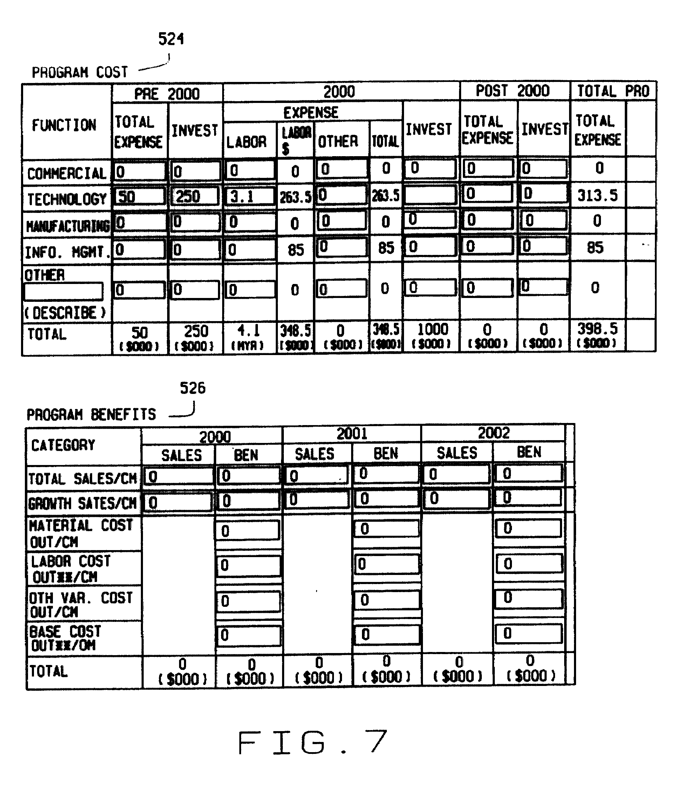

Figures 6-8 show an exemplary program funding request page 520 for prompting 508 a user to enter funding request data. Program funding request page 520 includes labeled input spaces, organized in sections, prompting the user to enter specific information via a computer keyboard or other input device. The sections of program funding request page 520 include a program description section 522, a program cost section 524, and a program benefits section 526. Program description section 522 includes identifying information such as the name of the person making the request, contact information for the requesting person, a project name, and other data indicating the category and type of business of the project. Program description section 522 further includes, for example, the objectives of the project, timing of the project, input spaces for entering projected cost breakdowns among different divisions of the organization. The cost breakdowns include annual figures for, for example, total expense, capital investment costs and labor costs for different divisions. In one embodiment, projected costs for coming years are also included. Program benefits section 526 includes projected annual sales and benefits figures and breakdowns.

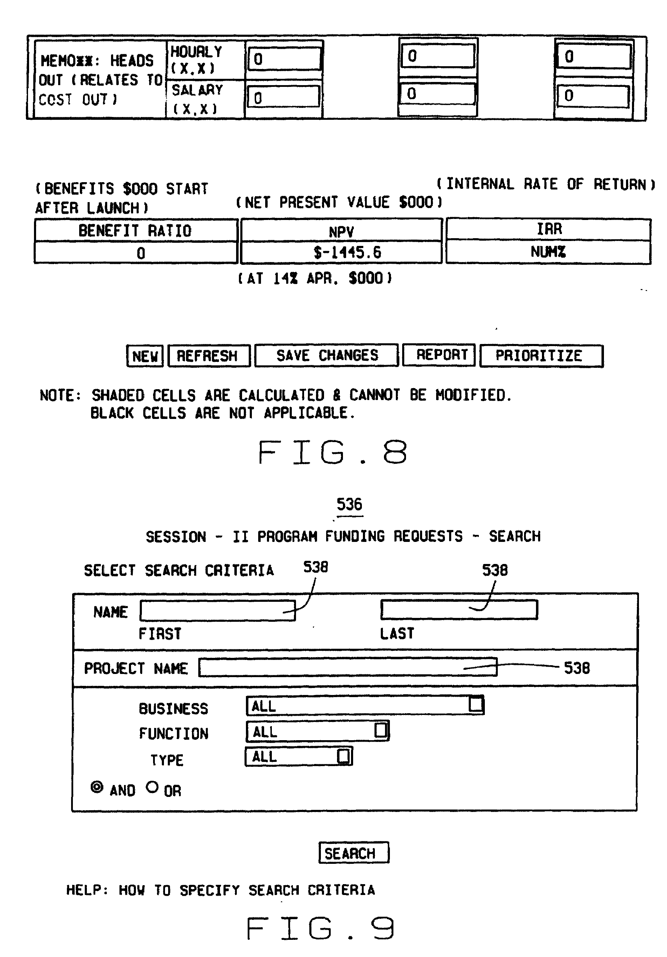

Referring again to Figure 5, method 500 further includes the steps of searching 530 the database for specific funding requests, by prompting 532 a user to specify a search output from the database, and manipulating 534 the database files in response to the request to provide the specified output. Figure 9 shows an exemplary search page 536 for searching previously entered funding requests. Search page 536 includes input spaces 538 for entering search criteria. Search criteria include, for example, the name of the person requesting the funding, project name, business division of the organization in which the project is categorized, function under which the project is categorized, and the like.

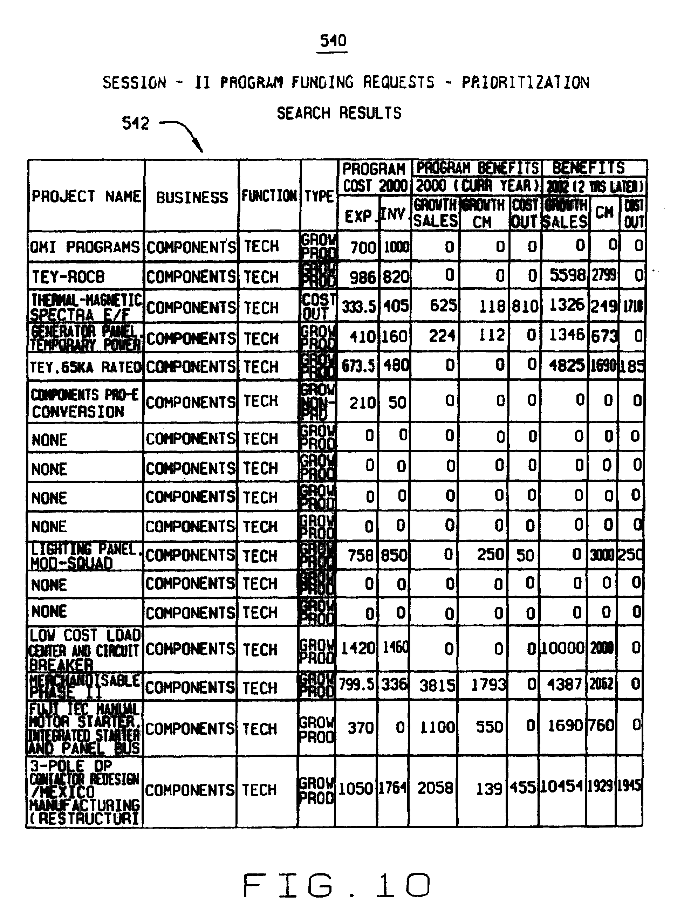

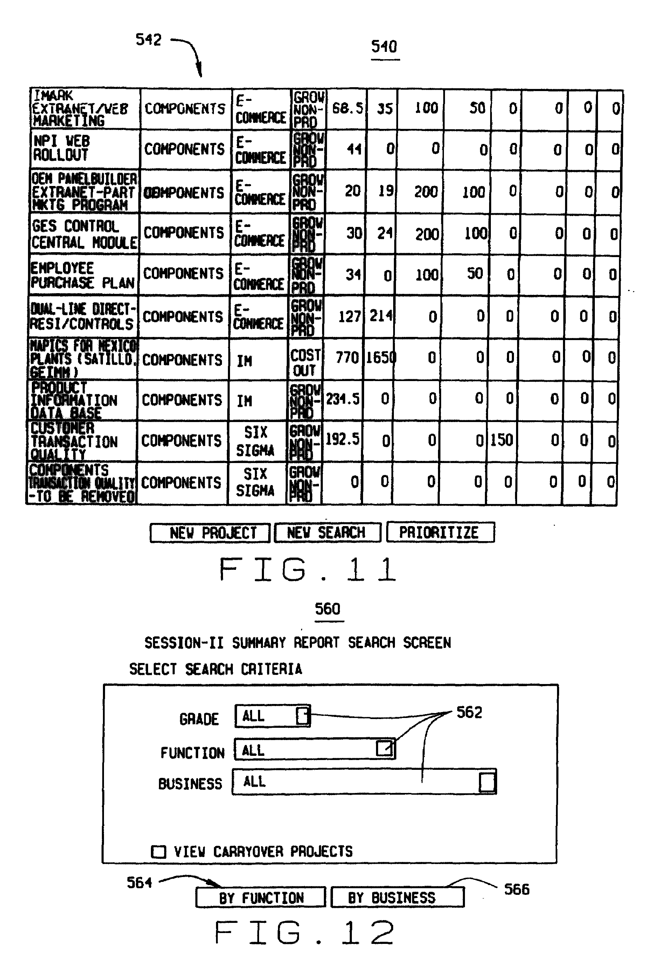

Figures 10 and 11 show an exemplary search results page 540 displaying a search output that is provided 542 in response to a funding request search. Search results page 540 includes an entry for each project name for which a funding request has been filed in the database. Each entry lists the project name, business, function, type, cost figures, benefits figures and a prioritization code.

In one embodiment, as shown in Figure 5, method 500 includes the step of summarizing 550 funding request data for a division of the organization. First, the user is prompted 552 to specify a summary output, and the database files are manipulated 554 to provide the summary report output. Finally, a summary report is provided 556. Figure 12 shows an exemplary summary report search input page 560 for implementing steps 550-556. Summary report search page 560 includes input spaces 562 for entering, for example, grade, function and business designations specifying the search criteria. Summary report search page 560 also includes radio buttons 564 and 566 for specifying the organization of a summary report output provided in response to a summary report request. Specifically, by clicking on button 564, the summary report output is organized by function. Alternatively, by clicking on button 566, the summary report is organized by business.

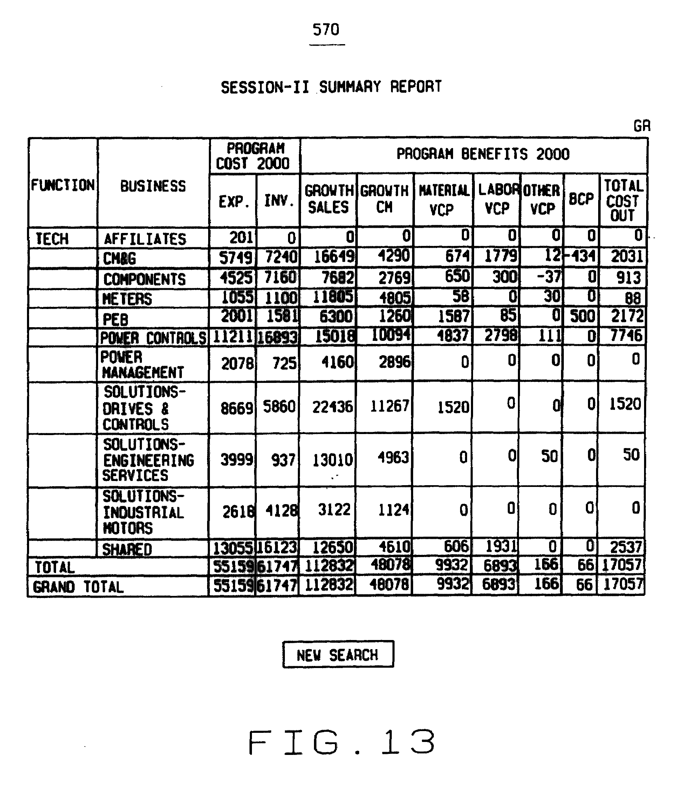

Figure 13 shows an exemplary summary report page 570. Summary report page 570 includes a partial listing of projects for which funding is requested, the partial listing including all projects within the business or function satisfying the search criteria specified by the user using summary report search page 560. In alternative embodiments, the method further includes the step of prioritizing all program funding requests within a specified group. Prioritization of each product is done, for example, by assigning a grade or priority code to each funding request. For example, prioritizing is done by a business unit for all funding requests falling within the sphere of influence of the business unit. For example, a summary report page 570 is generated of all funding requests satisfying search criteria that specify all funding requests within the sphere of influence of the business unit. A leader or member of the business unit then assigns a priority code to each funding request reported on summary report page 570. Alternatively, prioritizing is done by a business leader for all funding requests across business units under the leader. Once a priority grade or code has been assigned to a funding request, the prioritizations are reported, for example, on summary report page 570 or on a separate, supplemental report page (not shown). In another alternative embodiment, method 500 further includes the step of coding with a status code the funding status of each program funding request, to indicate to a user the current status of a program funding request within the funding approval process. The status code is, for example, reported on summary report page 570 or any report page that reports information about specific program funding requests in response to a user search request.

In an exemplary embodiment, Product Factory 152 provides access to a Web-based application embodying a method 600 for tracking communications and projects within an organization. More specifically, method 600 provides on-line, Web-based exchange of communications classified in multiple ways, thus directing the communications to different individuals or groups of individuals depending on the type of information. More specifically, method 600 directs communications to specific individuals, to all individuals involved in the same project, to all individuals on the same team, or to any individual having responsibility or interest in an issue. Thus, method 600 provides centralized, easily accessed, updated and ongoing tracking of the day-to-day detail and progress of projects, issues and communications within the organization. Method 600 is especially useful for organizations having multiple individuals working on the same project, team or issue from geographically or administratively separate divisions or departments.

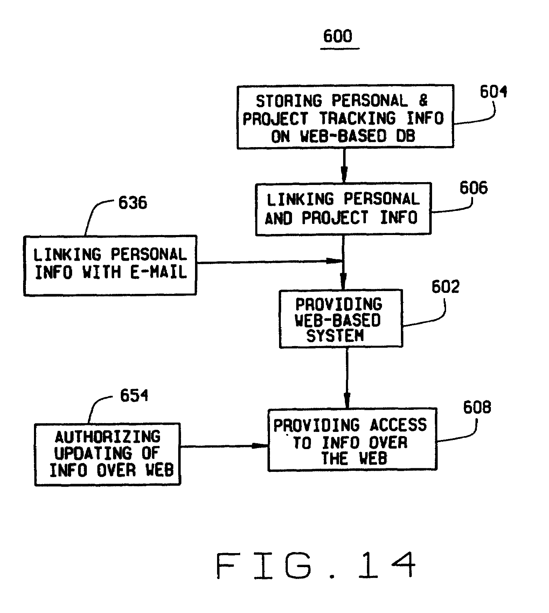

Figure 14 shows a flow chart for an exemplary embodiment of method 600. In one embodiment, method 600 includes the step of providing 602 a Web-based system for reporting personal information and project tracking information for a plurality of Web-users, wherein the personal information and project tracking information are linked. Step 602 includes the steps of storing 604 personal information and project tracking information on a Web-enabled database stored on a Web-server, and linking 606 the personal information and project tracking information so that personal information is accessible when project tracking information is accessed, and further so that project tracking information is accessible when personal information is accessed. Method 600 further includes the step of providing 608 access to the personal task information and project tracking information over the Web.

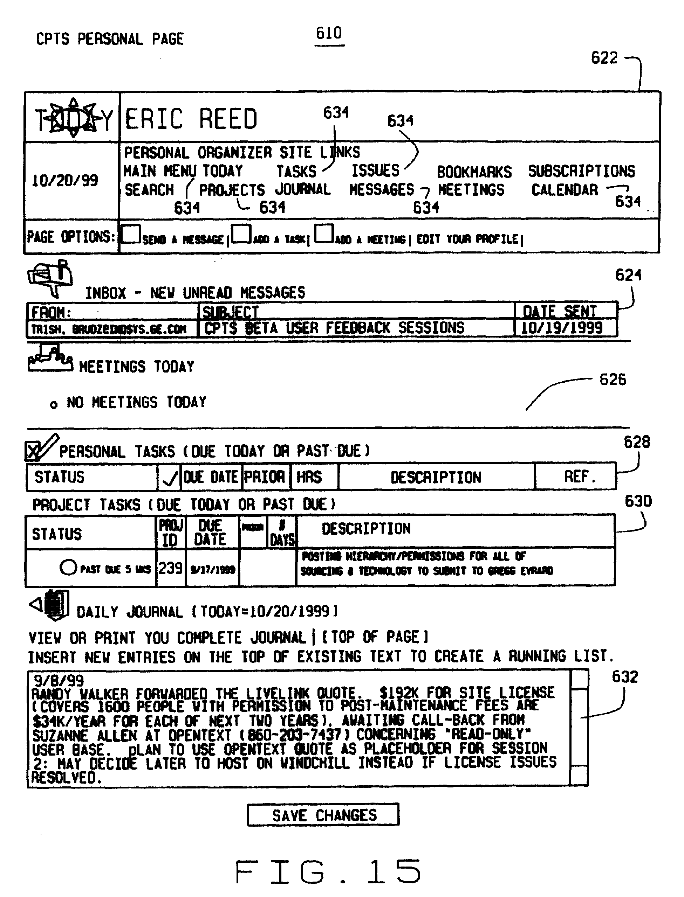

Figure 15 shows an exemplary home or first personal page 610 for implementing method 600. Home page 610 includes, for example, a plurality of hyperlinks guiding the user through available information, including personal information and project tracking information for an individual user. Page 610 summarizes, displays and provides links to personal information for a specified user authorized for access to Web server 402. The personal information includes, for example, a personal schedule and calendar, personal messages, a listing of personal tasks, a listing of project tasks, and daily journal entries. In one embodiment, first personal page 610 includes several subsections displaying, for example, a menu 622 of personal organizer site links, an inbox 624, a meeting schedule 626, a personal task box 628, a project task box 630, and a daily journal input space 632. Menu 622 displays a plurality of hyperlinks 634 which guide the user through pages of linked information in the system. From menu 622 as displayed on first personal page 610, the user links to additional personal information and project tracking information by, for example, clicking on one of hyperlinks 634, or by clicking on hyperlinks embedded elsewhere on pages as they are displayed. The user navigates through successively displayed pages to view linked information, and updates personal and project information so that displayed pages are modified as information is updated.

Referring again to Figure 14, in one embodiment step 602 includes the step of linking 636 personal information with an e-mail application so that e-mail messages are displayed with other personal information. Figure 15 shows inbox 624, which lists all new unread e-mail messages for the specified user. An icon 640 such as a mailbox operates as a hyperlink to a message page (not shown) which displays a second listing of all new e-mail messages, wherein each entry in the listing is a hyperlink to view a page displaying the message. To keep track of incoming messages, messages are marked with a mouse click by the user when read.

Personal task box 628 includes a listing of all due or past due tasks assigned to the specified user. The listing includes an entry for each task, wherein each entry includes, for example, a due date, a status box for indicating whether the task has been completed, number of hours devoted to completing the task to date, a description of the task, and any applicable project codes or task codes. Project task box 630 includes a listing of project tasks due or past due, the listing including an entry for each task. Project tasks are those tasks assigned to a project team, as opposed to an indvidual. Each entry includes, for example, a status box, a project identification code, a due date, and a project task description. Both personal tasks and project tasks are indicated as complete, or given a completion status, by entering updated with a keyboard or mouse.

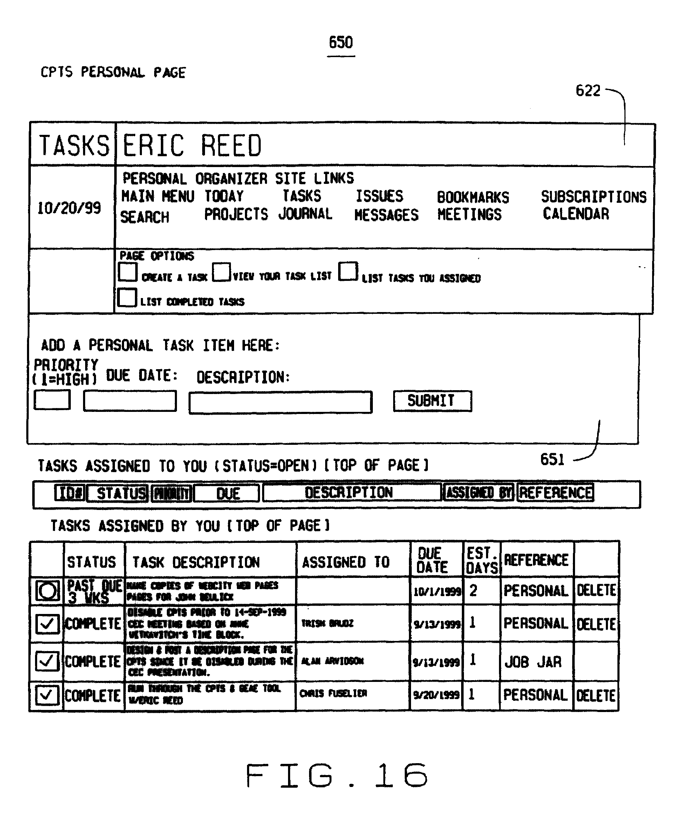

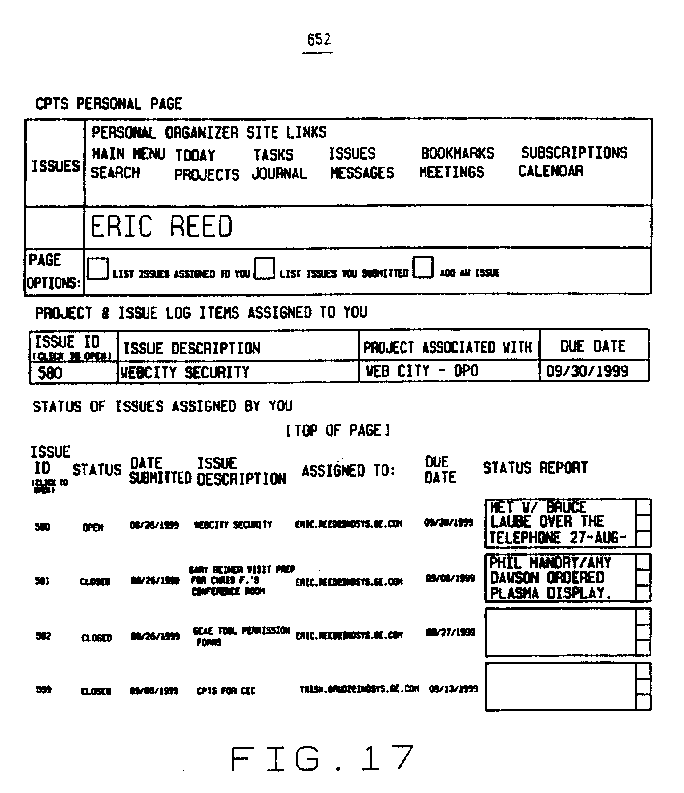

Figures 16 and 17 show an exemplary second personal page 650, and an exemplary third personal page 652 respectively, when the corresponding hyperlink is selected from homepage 610 For example, second personal page 650 displays a breakdown and status of project tasks as assigned to the specified user, or assigned to another individual by the specified user. An input space or window 651 prompts the specified user to add a personal task if desired. Further, tasks are checked off or otherwise indicated on the personal page when complete. Similarly, third personal page 652 lists issues assigned to the specified user or assigned by the specified user to another individual. Issues include problems or potential problems that have been identified and assigned a risk score based on the probability of occurrence and the impact if the problem does occur. Each issue requires abatement plans and trigger dates which are to be tracked. Additional tasks may be generated by the identification of issues. As with the project tasks, issues are checked off or otherwise indicated on the personal page when complete. Further, one embodiment of third personal page 652 includes an icon indicating a hyperlink to an issue input page which the specified user uses to add an issue. In alternative embodiments of method 600, additional personal pages are added to provide additional project tracking and personal organization functions. For example, in one embodiment of method 600, an additional personal page (not shown) includes input spaces and hyperlinks guiding the user through adding a new project to the personal information reported on personal pages 620, 650 and 652.

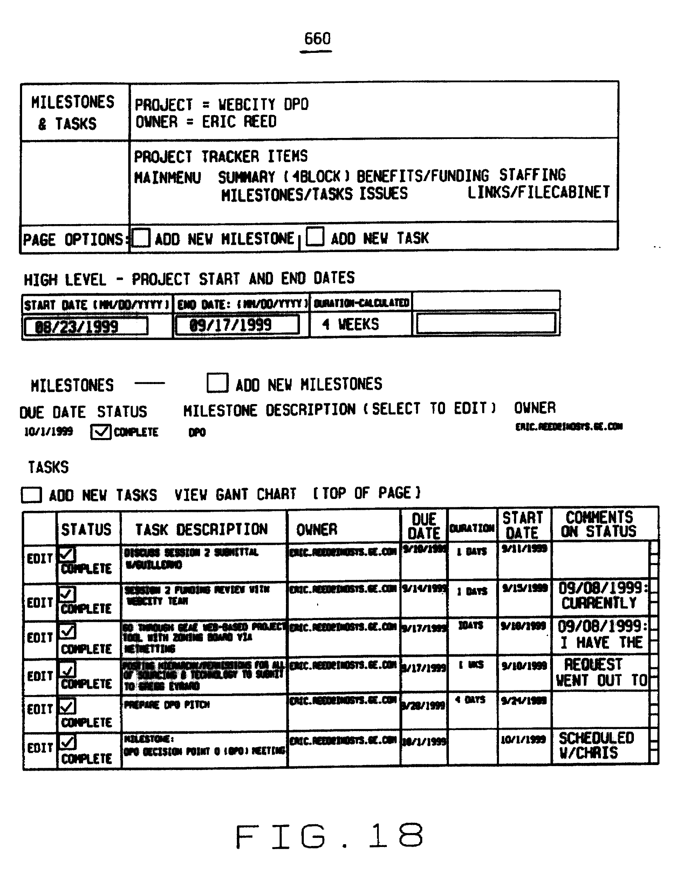

Figures 18-23 show exemplary project tracking pages for tracking completion of tasks and milestones toward completion of a project. The project tracking pages are displayed, for example, when a project tracker hyperlink 634 is selected from home page 610. As shown in Figure 14, displayed project information is subject to editing and updating by a project owner, who is a user authorized 654 by Web server 402 to make such changes. Figure 18 shows an exemplary first project tracking page 660 which in one embodiment displays project start and end dates, a milestone listing, and a task listing. As with the personal information displayed on the personal pages described above, all project tracking information is subject to editing or updating using hyperlinks displayed on the pages. Therefore, project start and end dates, milestones and tasks can be modified by a user specified as the "owner". For example, an owner can own a task or an issue, and is the individual responsible for the given task or issue. In one embodiment, the milestone and task entries include such information as status, description, owner, due date, comments, and the like.

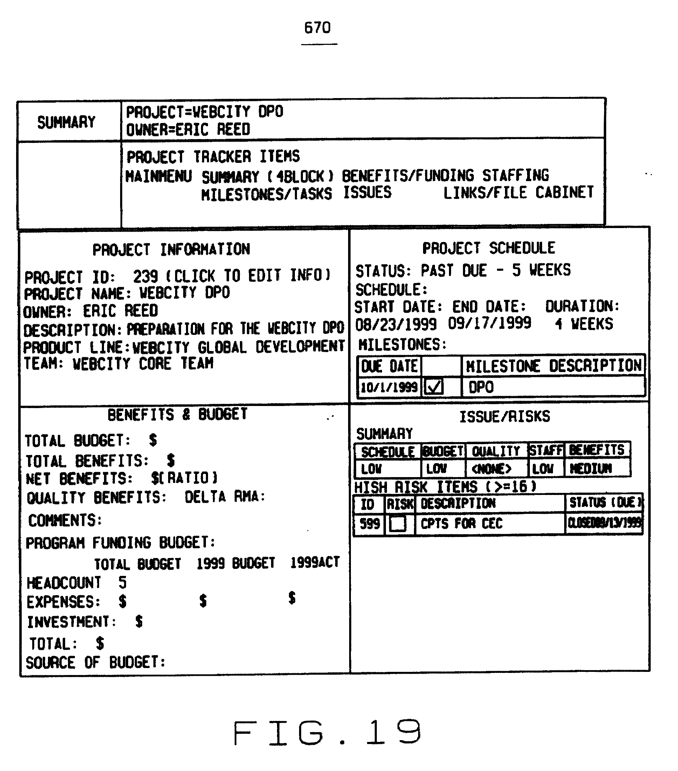

Figure 19 shows an exemplary second project tracking page 670 on which basic project identification information including, for example, a project code number, project name, project owner, description, product line and team assignment, is displayed. Page 670 also displays a project schedule, benefits and budget breakdown, issue summary and risk assignment.

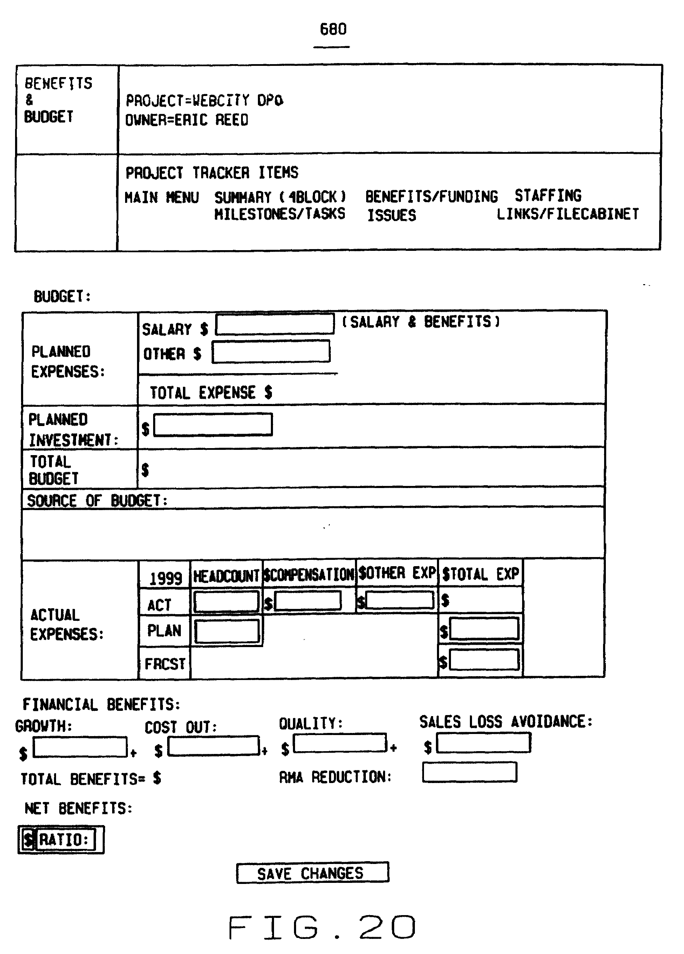

Figure 20 shows an exemplary third project tracking page 680 on which basic anticipated project benefits and budget information is displayed. The benefits and budget information includes, for example, a project budget breakdown, a calculation of financial benefits and a calculation of net benefits.

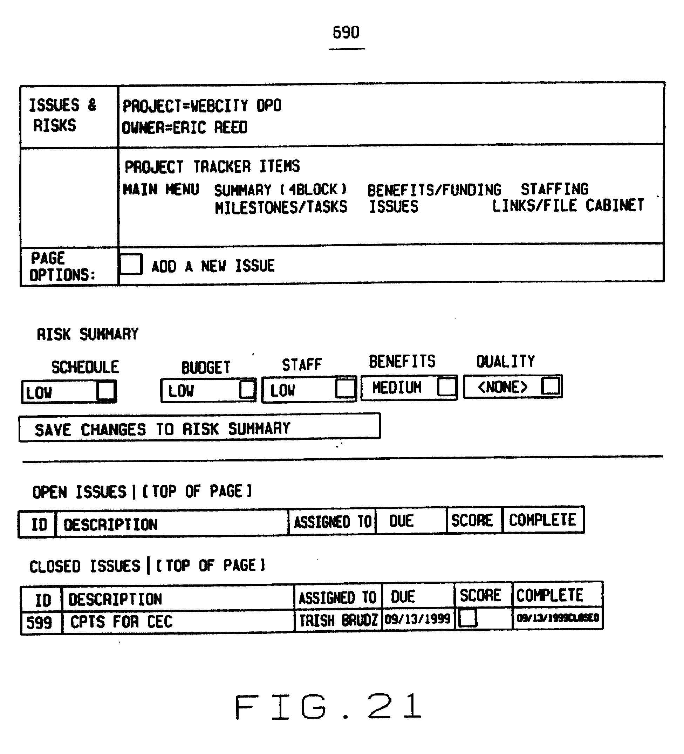

Figure 21 shows an exemplary fourth project tracking page 690 on which issues and risks of the project are displayed. In one embodiment, page 690 displays, for example, a risk summary, and a summary of open and closed issues relating to the project.

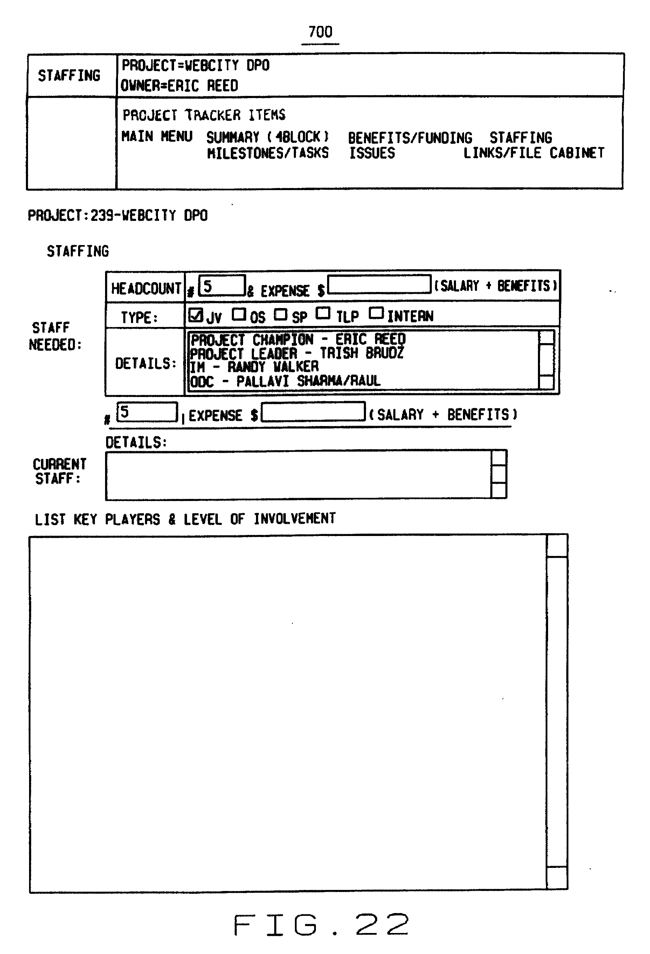

Figure 22 shows an exemplary fifth project tracking page 700 on which project staffing information is displayed. The project staffing information includes, for example, a head count of individuals assigned to the project, names and titles or duties of individuals assigned to the project, and a calculation of staffing expenses.

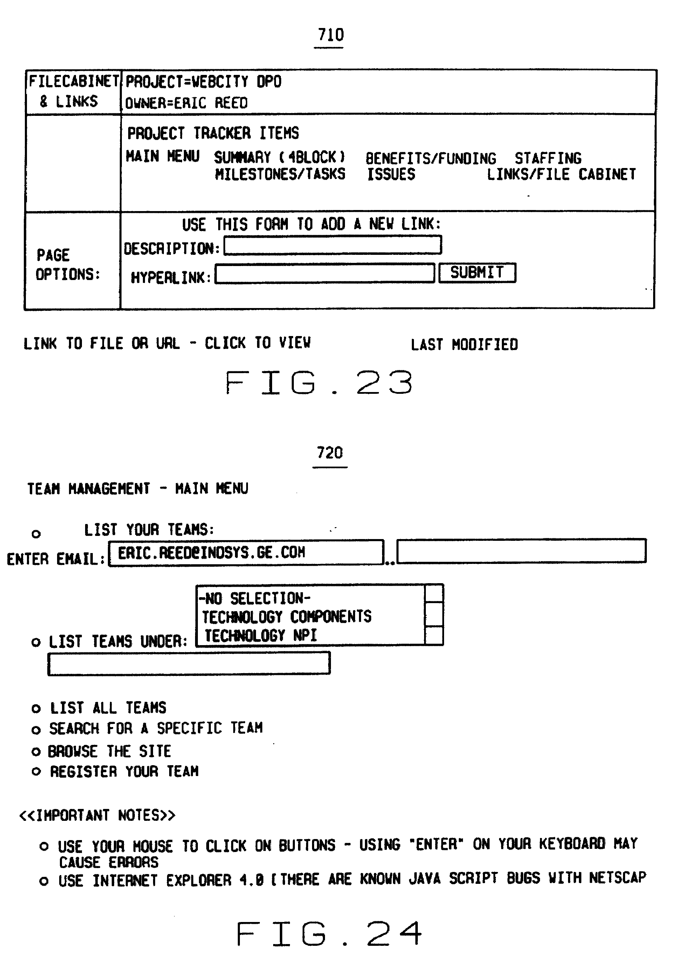

Figure 23 shows an exemplary sixth project tracking page 710 which offers input spaces for describing and adding a new link regarding the project.

Figure 24 shows an exemplary team management main menu page 720 for tracking teams of individuals assigned to work under a specific individual, or on specific tasks, issues, projects, or the like. Page 720 is displayed, for example, when a team management hyperlink 634 is selected from home page 610. From page 720, a user follows hyperlinks to, for example, view a list of all teams within the organization, search for a specific team, browse the site, or register a team by providing team information.

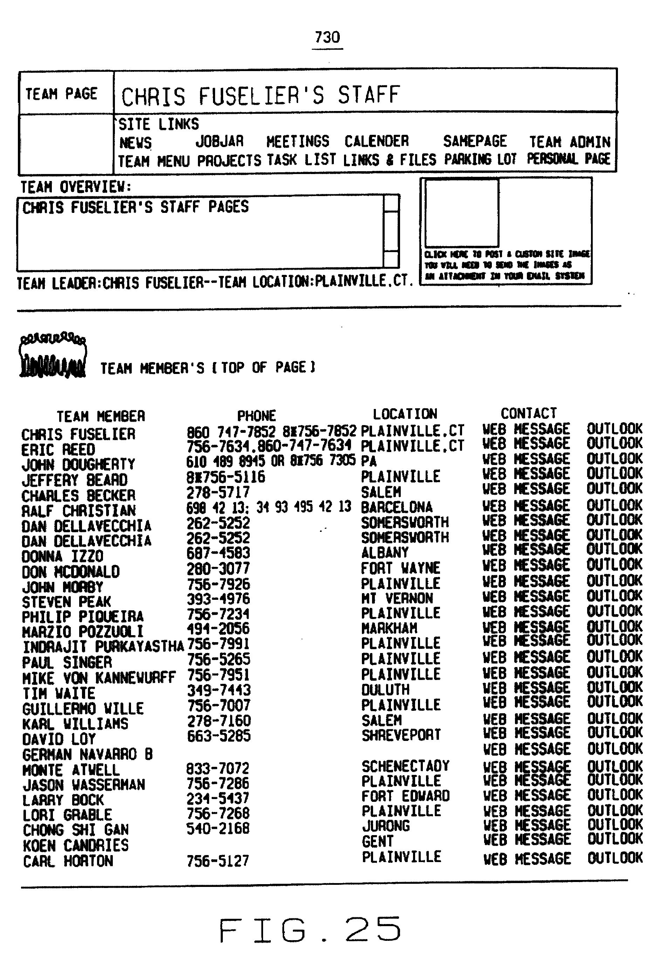

Figure 25 shows an exemplary team page 730 displayed upon requesting a search from page 720, and displays a list of all team members assigned to work under a particular individual as specified on page 720.

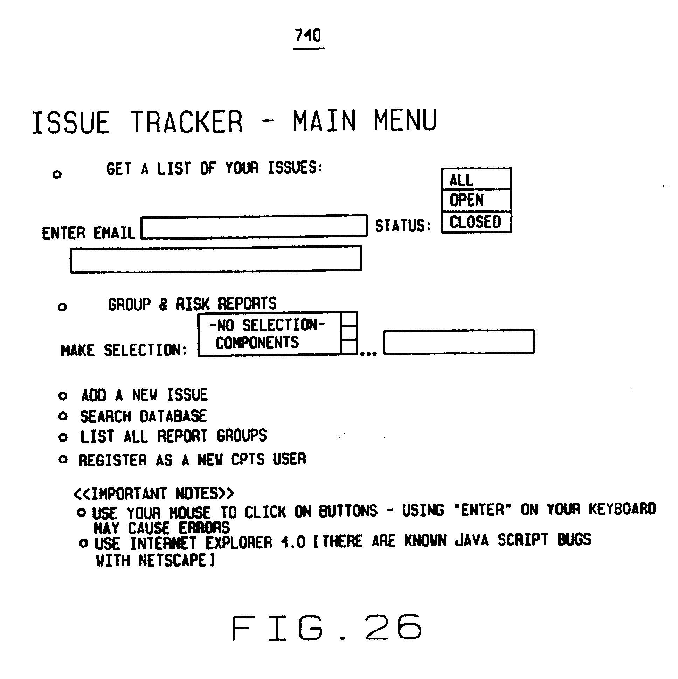

Figure 26 shows an exemplary issue tracker main menu page 740 which is displayed, for example, when issue tracker hyperlink 618 is selected from home page 620. Issue tracker main menu page 740 tracks issues across projects, individuals and teams. To track an issue, the user follows hyperlinks and provides input as prompted by input spaces to specify and track an issue.

In one embodiment, access to Web server 402 is limited so that only authorized users with an access code can view and manipulate information stored on Web server 402. For example, access is machine-limited so that only authorized remote computers have permission to get through a security firewall. To implement the firewall, the Intranet composed of terminals linked by local connections to Web servers 402 and 404, includes a proxy server or servers (not shown) through which all communications with computers outside the Intranet must take place. The proxy server is programmed to validate queries from a user on any machine authorized to communicate with the Intranet via a remote terminals 416. The proxy servers include special programs enabling them to forward valid requests or queries from authorized machines through the firewall to Web server 402 and 404. In an alternative embodiment, the security element identifies authorized users rather than machines. This approach is more complex than the basic firewall approach because queries or requests from a user from any remote machine 416 are validated using an encrypted unique identifier. To implement the encryption approach, one embodiment uses a security tool, i.e. a secure user management system that integrates with industry-standard LDAP file structure, such as SiteMinder® from Netegrity, Inc.of Waltham, MA. The unique identifier is, for example, a password or validation code consisting of an alphanumeric string. The unique identifier is encrypted to frustrate password sniffing by individuals who intercept unencrypted passwords as they pass from machine to machine through network 400. The proxy server validates the encrypted unique identifier, and allows access to Web servers 402 and 404, and associated local Intranet. In another alternative embodiment, Web server 402 or a proxy server identifies authorized users using a one-time or limited use password supplied by the server on request from the user.

The Web-based methods consolidate and organize information to facilitate Web-based communications among multiple divisions or departments of a large organization. The methods also improve Web-based communications among individuals working in different geographic locations for the same organization by organizing Web-based information in a readily learned and easily navigated system. Further, the methods, by facilitating Web-based communications, reduce phone and standard mail usage among individuals in geographically distant locations. The methods are therefore particularly useful for large organizations having multiple nationally or globally distributed divisions.

For the sake of good order, various aspects of the invention are set out in the following clauses:-
1. A method for facilitating Web-based information exchange, said method comprising the step of providing a centralized Web structure for the Web-based information of an organization, the Web structure comprising a plurality of Web sites linked together to form the Web structure.
2. A method in accordance with Clause 1 further comprising the step of storing the Web-based information of the organization in the plurality of Web sites in the centralized Web structure.
3. A method in accordance with Clause 2 wherein said step of providing a centralized Web structure comprising a plurality of Web sites linked together comprises providing sufficient links among the Web sites so that all the Web-based information is accessible from any one location in the Web structure.
4. A method in accordance with Clause 3 wherein said step of providing sufficient links among the Web sites so that all the Web-based information is accessible from any one location in the Web structure comprises the step of providing at least one point of entry to the Web structure from which all the Web based information of the organization is accessible.
5. A method in accordance with Clause 2 further comprising the step of applying a centralized navigational scheme to the centralized Web structure.
6. A method in accordance with Clause 5 wherein said step of applying a centralized navigational scheme to the centralized Web structure comprises the steps of:
   providing a plurality of names for the plurality of Web sites, wherein the names are chosen to identify the content of each Web site and wherein the names are based on a common theme; and
   assigning a name to each of the plurality of Web sites.
7. A method in accordance with Clause 6 further comprising the step of creating a plurality of virtual co-locations wherein each Web site is a virtual co-location.
8. A method in accordance with Clause 7 wherein said step of applying a centralized navigational scheme to the centralized Web structure comprises the steps of:
   providing a plurality of location names for the plurality of Web sites, wherein the location names are chosen from real locations in a community; and assigning each location name to a Web site so that the location name of each Web site identifies content of the Web site.
9. A method in accordance with Clause 8 wherein the Web-based information comprises a plurality of data files and wherein said step of storing the Web-based information in the plurality of Web sites comprises the step of storing a subset of the plurality of data files at each Web site, the subset of data files at each Web site providing function and content identifiable with the location name of the Web site.
10. A method in accordance with Clause 9 further comprising the steps of:
   creating a central virtual co-location; and
   assigning the name of a real central administration building to the central virtual co-location.
11. A method in accordance with Clause 10 wherein said step of providing a centralized Web structure comprises the step of linking the plurality of Web sites to the central virtual co-location.
12. A method in accordance with Clause 10 wherein said step of linking the plurality of Web sites to the central virtual co-location comprises the step of linking each of the plurality of Web sites at least indirectly to the central virtual co-location. 13. A method for facilitating Web-based information exchange, said method comprising the step of providing one Web structure for storing the Web-based information of an organization.
14. A method in accordance with Clause 13 further comprising the step of providing Internet access to the Web structure to a plurality of users authorized by the organization.
15. A method in accordance with Clause 43 wherein said step of providing one Web structure for storing the Web-based information of an organization comprises the step of providing a plurality of Web sites linked together to form the Web structure, wherein any one Web site is accessible from another Web site.
16. A method in accordance with Clause 15 wherein said step of providing a plurality of Web sites linked together to form the Web structure comprises providing a plurality of Web sites each having distinct content.
17. A method in accordance with Clause 16 further comprising the step of providing a navigational scheme for a user to navigate the Web structure.
18. A method in accordance with Clause 17 wherein said step of providing a navigational scheme for a user to navigate the Web structure comprises the step of providing a name for each Web site wherein the name for a Web site identifies the content of the Web site.
19. A method for facilitating computer network-based information exchange, said method comprising the steps of:
   providing a plurality of sites for containing network-based information on a central server;
   linking the plurality of sites to one another so that any one of the sites is at least indirectly accessible from any one of the remaining sites; and
   naming each of the plurality of sites on the central server wherein all of the plurality of names are based on a common theme and wherein each name identifies the network-based information stored at each site.

## Claims

1. A method for facilitating Web-based information exchange, said method comprising the step of providing a centralized Web structure for the Web-based information of an organization, the Web structure comprising a plurality of Web sites linked together to form the Web structure.

2. A method in accordance with Claim 1 further comprising the step of storing the Web-based information of the organization in the plurality of Web sites in the centralized Web structure.

3. A method in accordance with Claim 1 or 2 wherein said step of providing a centralized Web structure comprising a plurality of Web sites linked together comprises providing sufficient links among the Web sites so that all the Webbased information is accessible from any one location in the Web structure.

4. A method in accordance with Claim 3 wherein said step of providing sufficient links among the Web sites so that all the Web-based information is accessible from any one location in the Web structure comprises the step of providing at least one point of entry to the Web structure from which all the Web based information of the organization is accessible.

5. A method in accordance with Claim 2 further comprising the step of applying a centralized navigational scheme to the centralized Web structure.

6. A method for facilitating Web-based information exchange, said method comprising the step of providing one Web structure for storing the Web-based information of an organization.

7. A method in accordance with Claim 6 further comprising the step of providing Internet access to the Web structure to a plurality of users authorized by the organization.

8. A method in accordance with Claim 6 wherein said step of providing one Web structure for storing the Web-based information of an organization comprises the step of providing a plurality of Web sites linked together to form the Web structure, wherein any one Web site is accessible from another Web site.

9. A method in accordance with Claim 8 wherein said step of providing a plurality of Web sites linked together to form the Web structure comprises providing a plurality of Web sites each having distinct content.

10. A method for facilitating computer network-based information exchange, said method comprising the steps of:
providing a plurality of sites for containing network-based information on a central server;
linking the plurality of sites to one another so that any one of the sites is at least indirectly accessible from any one of the remaining sites; and
naming each of the plurality of sites on the central server wherein all of the plurality of names are based on a common theme and wherein each name identifies the network-based information stored at each site.
